# EUROPEAN PATENT APPLICATION

(11) **EP 1 763 028 A2**
(43) Date of publication of application: **14.03.2007**
(21) Application number: 06017435.6
(22) Date of filing: 22.08.2006
(51) Int. Cl.: G11B 20/00, G11B 20/12, G06F 21/00

(54) **Hard disk recorder**

(30) Priority: 22.08.2005 JP 2005239580
(71) Applicant: Funai Electric Co., Ltd., Daito-shi Osaka 574-0013 (JP)
(72) Inventor: Tsukada, Seiji, Daito-shi Osaka 574-0013 (JP)
(74) Representative: Beetz & Partner

(57) **Abstract**

When recording the picture data or voice data on the hard disk, the encrypted data is generated through the encryption process with the serial number as the key based on the file system, and the encrypted data is recorded on the hard disk. When powered on, the encrypted data is read from the hard disk, the decoded data is generated with the serial number as the key, and the decoded data is determined whether normal or not. If normal, the data can be reproduced, and if abnormal, the data cannot be reproduced.

## Description

### BACKGROUND OF THE INVENTION

### 1. Field of the Invention

The present invention relates to a hard disk recorder incorporating a hard disk, which acts as a recording medium, for recording picture data or voice data on the hard disk.

### 2. Description of Related Art

A hard disk recorder for receiving television broadcast signal and the like and recording the picture data and the voice data on the incorporating hard disk has been conventionally developed. Since the picture data and the voice data are recorded on the hard disk as digital data, the data will not degrade even if the recorded data are copied onto the hard disk of another hard disk recorder, and thus the reproduced picture and voice will not degrade. In a case where the data to be copied is paid content, indefinite repetition of such copying largely undermine the interest of the content provider. Thus various measures are conventionally being put to practice for such illegal copying in the digital recording device.

For example, the digital recording and reproducing device as described below is disclosed in Japanese Laid-Open Patent Publication No. 2001-351323. In the recording process of the content, a TS process is performed in which an ATS (arrival time stamp) is added to the transport packet contained in the received content, and thereafter, encryption process is performed. In the encryption process, a device unique key is generated from the device key (key set when manufacturing the recording and reproducing device) and the like, a block key is generated from the device unique key and the block seed set as data added in the TS process, and the content is encrypted based on the block key. The encrypted data is recorded on the recording medium. In the reproduction process of the data recorded in this manner, the device unique key is first generated, the block key is generated from the device unique key and the block seed read from the recording medium, the encrypted content read from the recording medium is decoded using the block key, the control according to the ATS is performed, and the content is reproduced.

According to such a configuration, in a case of the hard disk recorder in which the recording medium is a hard disk, for example, the copied encrypted content cannot be decoded and reproduced even if the content recorded on the hard disk of another hard disk recorder is illegally copied onto the hard disk of the relevant hard disk recorder since the device keys are different between the relevant hard disk recorders. Thus, the user of the relevant hard disk recorder needs to properly receive the content in order to reproduce the content, and thus the interest of the content provider is protected.

However, the amount of data or the bit rate to be processed by such hard disk recorder is large since the encryption process is performed on the received content in such hard disk recorder. Further, a dedicated LSI is required to perform the encryption process in addition to the CPU. In addition, if the dedicated LSI is not provided, the processing speed of the CPU required to be faster. In either case, the cost increases disadvantageously.

### SUMMARY OF THE INVENTION

The present invention aims to provide a hard disk recorder that realizes an illegal copy protection function for protecting the interest of the content provider while suppressing the increase in cost.

In order to achieve the above aim, the hard disk recorder of the present invention includes: a hard disk configured as a recording medium; a controlling section that creates encrypted data through encryption process with information unique to each device as key based on file system; a data recording section that records encrypted data onto the hard disk; and a data reading section. After powered on, the data reading section reads the encrypted data from the hard disk, and the controlling section decodes the read encrypted data and creates decoded data with the information unique to each device as the key, and determines whether or not the decoded data is normal. When the controlling section determines the decoded data to be normal, the data recorded on the hard disk becomes reproducible, and when the controlling section determines the decoded data to be abnormal, the data recorded on the hard disk becomes irreproducible.

According to such a configuration, the data cannot be reproduced when the data recorded on the hard disk of a hard disk recorder different from the relevant hard disk recorder is illegally copied onto the hard disk of the relevant hard disk recorder. That is, only the data recorded on the relevant hard disk recorder can be reproduced. Thus, the interest of the content provider is protected. The encryption process in this case is performed to the file system, where the amount of data is small and frequent disc access is not required. Therefore, a dedicated LSI for the encryption process is not necessary, the processing speed of a CPU does not need to be faster, and the illegal copy protection function is realized without involving increase in cost.

Preferably, in the hard disk recorder, when the controlling section determines the decoded data to be abnormal, only the formatting operation is performable out of the data processes using the hard disk, and the recorded data becomes irreproducible.

The illegally copied data thus must be erased, thereby preventing the illegally copied data from increasing indefinitely.

Preferably, in the hard disk recorder, the controlling section incorporates predetermined check data to a predetermined position of the file system, and creates the encrypted data through encryption process with the information unique to each device as key, and after powered on, the controlling section determines whether or not the decoded data is normal based on whether or not the data of the predetermined position of the decoded data matches the predetermined check data.

Furthermore, in the hard disk recorder, a serial number is preferably used as the information unique to each device.

As described above, according to the present invention, it is possible to provide the hard disk recorder for realizing the illegal copy protection function for protecting the interest of the content provider while suppressing the increase in cost.

### BRIEF DESCRIPTION OF THE DRAWINGS

Fig. 1 is a block diagram of a hard disk recorder according to the present invention and peripheral circuits thereof;
Fig. 2 is a flow chart showing an operation procedure in a formatting operation in the hard disk recorder according to the present invention;
Fig. 3 is a flow chart showing an operation procedure when recording picture and voice data in the hard disk recorder according to the present invention; and
Fig. 4 is a flow chart showing an operation procedure when the hard disk recorder according to the present invention is powered on.

### DESCRIPTION OF THE PREFERRED EMBODIMENTS

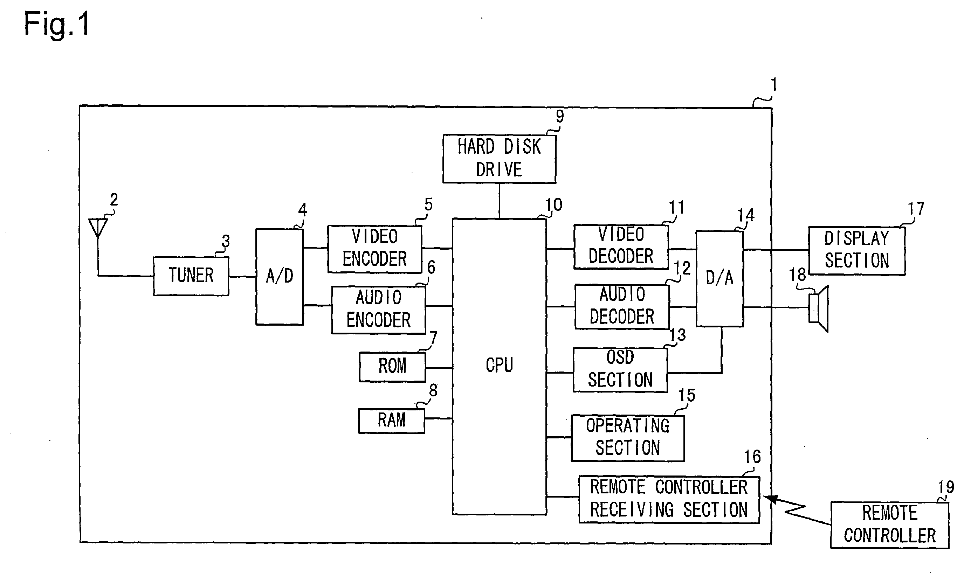

The embodiment of the present invention will now be described with reference to the drawings. Fig. 1 shows a block diagram of a hard disk recorder 1 of the present invention and the peripheral circuits thereof.

A tuner 3 demodulates the television broadcast signal received by an antenna 2 and transmits the result to an A/D converter 4. The A/D converter 4 converts the analog data of picture and voice received from the tuner to digital data, and transmits the result to a video encoder 5 and an audio encoder 6. The video encoder 5 compresses the picture data received from the A/D converter 4 by a predetermined compression method. The audio encoder 6 compresses the voice data received from the A/D converter 4 by a predetermined compression method.

A hard disk drive 9 performs the operations of recording the compressed picture and voice data and a file system to be hereinafter described onto the incorporating hard disk or reading the data recorded on the hard disk.

A CPU 10 executes the program stored in a ROM 7 and controls each section or performs encryption process and the like to be hereinafter described. The ROM 7 is a non-rewritable memory, and the program to be executed by the CPU 10 and serial number information to be hereinafter described, as well as the initial data of the file system are stored therein. A RAM 8 is a rewritable memory and is used as a work area of the CPU 10.

A video decoder 11 decompresses the picture data received at the antenna 2 and then compressed, and the compressed picture data read from the hard disk by the hard disk drive 9 at a predetermined decompression method and transmits the result to a D/A converter 14. An audio decoder 12 decompresses the voice data received at the antenna 2 and then compressed, and the compressed voice data read from the hard disk by the hard disk drive 9 at a predetermined decompression method and transmits the result to the D/A converter 14. An OSD (On Screen Display) section 13 generates character data or graphic data in response to the instruction of the CPU 10, and transmits the result to the D/A converter 14. The D/A converter 14 converts the decompressed picture and voice data received from the video decoder 11 and the audio decoder 12, as well as the character data and graphic data received from the OSD section 13 to analog data, and transmits the picture data to a display section 17 and the voice data to a speaker 18.

The display section 17 and the speaker 18 are arranged in a television receiver and the like, and are connected to the D/A converter 14 by way of terminals (not shown) provided at the hard disk recorder 1. An operating section 15 is provided to allow the user to perform the operation of the hard disk recorder 1 and is a button and the like. A remote controller receiving section 16 receives an operation signal from a remote controller 19 exterior to the hard disk recorder 1.

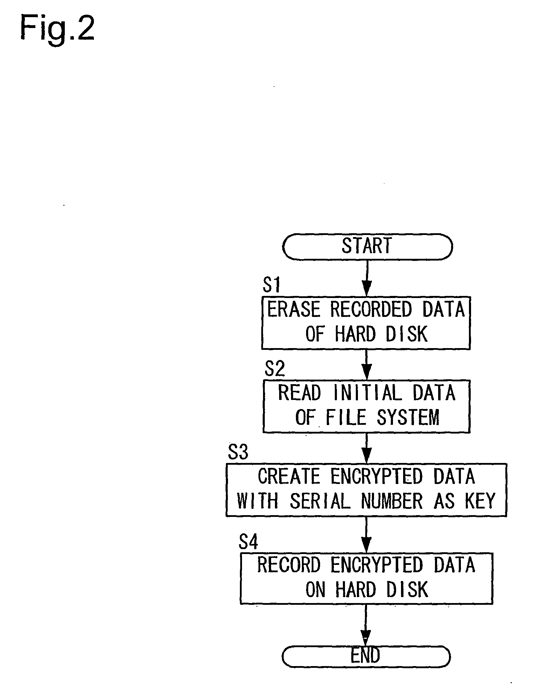

The operation during hard disk formatting in the hard disk recorder according to the present invention of the above configuration will now be described with reference to the flow chart of Fig. 2.

The formatting of the hard disk is performed at the time of factory shipment, or operation of the user through the operating section 15 or the remote controller 19. First, in step S1, the CPU 10 erases the data recorded on the hard disk using the hard disk drive 9.

In step S2, the CPU 10 reads the initial data of the file system from the ROM 7. The file system is the information for managing the data recorded on the hard disk, and is generally used in the hard disk recorder.

In step S3, the CPU 10 creates the encrypted data with the serial number as the key based on the initial data of the file system read in step S2. The CPU 10 first incorporates the predetermined check data to a predetermined position (e.g. for every 256 byte) of the file system. The file system with the check data is encrypted using the encryption algorithm such as DES with the serial number read from the ROM 7 as the key.

In step S4, the CPU 10 transmits the encrypted data created in step S3 to the hard disk drive 9, and the hard disk derive 9 records the encrypted data onto the hard disk.

The formatting of the hard disk is thereby completed.

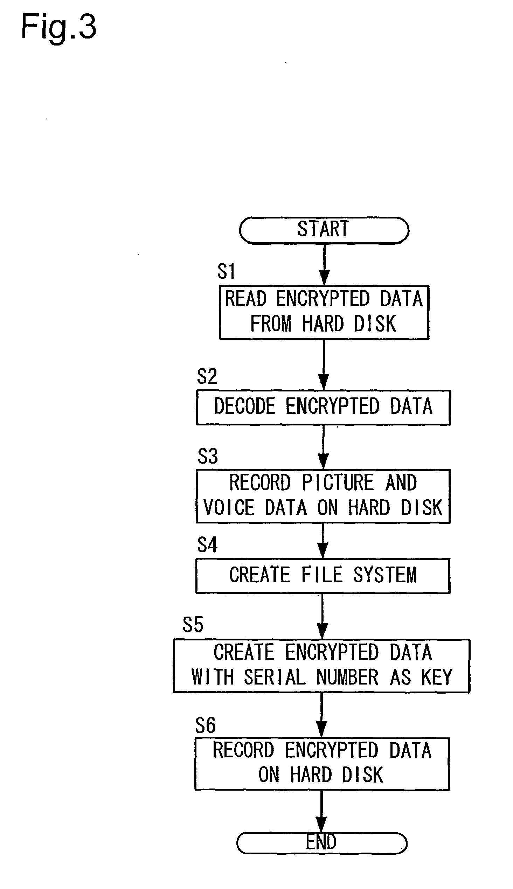

The operation of the hard disk recorder according to the present invention when recording the picture and voice data to the hard disk will now be described with reference to the flow chart of Fig. 3.

In step S1, the CPU 10 reads the encrypted data from the hard disk using the hard disk drive 9 when the recording operation is performed in the operating section 15 or the remote controller 19 by the user.

In step S2, the CPU 10 decodes the read encrypted data with the serial number read from the ROM 7 as the key, and writes the decoded data to the RAM 8. The decoded data is such in which the check data is incorporated in the file system as described above.

In step S3, the CPU 10 transmits to the hard disk drive 9, the picture and voice data received at the antenna 2 and compressed in the video encoder 5 and the audio encoder 6, respectively, and the hard disk drive 9 records the compressed picture and voice data onto the hard disk.

In step 4, when the recording of the picture and voice data are finished in step S3, the CPU 10 creates a new file system based on the picture and voice data recorded on the hard disk and the decoded data written to the RAM 8.

In step S5, the CPU 10 creates the encrypted data with a method similar to that in the formatting operation as described above with the serial number read from the ROM 7 as the key based on the file system created in step S4.

In step S6, the CPU 10 transmits the encrypted data created in step S5 to the hard disk drive 9, and the hard disk drive 9 overwrites the encrypted data on the hard disk.

In this manner, the encrypted data based on the file system recorded on the hard disk is updated each time the picture and voice data are recorded onto the hard disk.

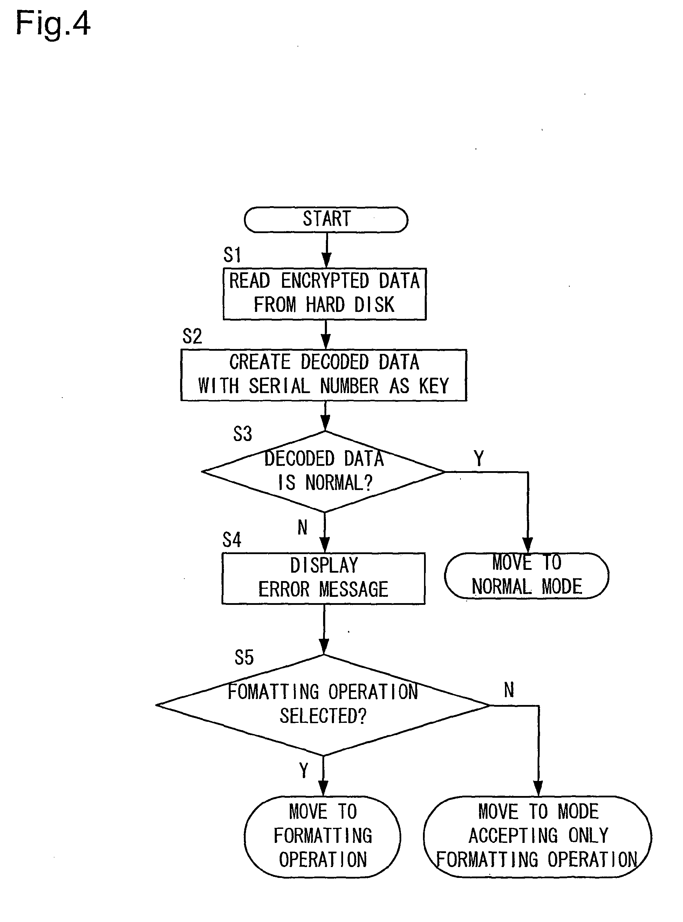

The operation of the hard disk recorder according to the present invention when the hard disk recorder is powered on will now be described with reference to the flow chart of Fig. 4.

In step S1, the power is turned on, and the CPU 10 first reads the encrypted data from the hard disk using the hard disk drive 9 when the power-on operation is performed at the operating section 15 or the remote controller 19 by the user.

In step S2, the CPU 10 decodes the encrypted data read in step S1 and creates the decoded data with the serial number read from the ROM 7 as the key, and writes the result to the RAM 8.

In step S3, the CPU 10 determines whether or not the decoded data written to the RAM 8 in step S2 is normal or not. Here, the CPU 10 determines whether or not the data of the predetermined position in the decoded data matches the predetermined check data incorporated in encryption, and determines the decoded data as normal when the match is found, and as abnormal when the match is not found.

If the decoded data is normal (Y in step S3), the CPU 10 changes to the normal mode, and the recordation of the picture and voice data to the hard disk or the reproduction of the picture and voice data from the hard disk are performed, when the operation of recording or reproducing is performed by the user at the operating section 15 or the remote controller 19.

If the decoded data is abnormal (N in step S3), in step 4, the CPU 10 displays an error message "No reproducible content in the hard disk. Ready to format? Y/N" on the display section 17 through the OSD section 13. In this state, the CPU 10 only accepts the operation at the operating section 15 and the remote controller 19 for selecting "Y/N" displayed on the display section 17.

When the user selects the display "Y" with the operating section 15 or the remote controller 19 while looking at the display section 17 (Y in step S5), the formatting operation such as the flow chart of Fig. 2 is performed, the data recorded on the hard disk is erased, and the encrypted data based on the initial data of the file system is recorded on the hard disk.

When the user selects the display "N" with the operating section 15 or the remote controller 19 while looking at the display section 17 (N in step S5), the CPU 10 changes to a mode of not accepting the operation in the operating section 15 and the remote controller 19 other than the operation for the formatting operation among the operations for data processing using the hard disk. When the operation (e.g., operation of pushing the formatting button in the operating section 15) for the formatting operation is performed by the user in the operating section 15 or the remote controller 19, the formatting operation such as the flow chart of Fig. 2 is performed, the data recorded on the hard disk is erased, and the encrypted data based on the initial data of the file system is recorded on the hard disk.

As described above, when the data (picture and voice data and encrypted data) recorded on the hard disk of another hard disk recorder having a different serial number from the relevant hard disk recorder is illegally copied to the hard disk of the relevant hard disk recorder, the encrypted data created through the encryption process with the serial number different from the relevant hard disk recorder as the key based on the file system in the other hard disk recorder is decoded with the serial number of the relevant hard disk recorder when powered on (step S2 of Fig. 4). Therefore, the data of the predetermined position in the decoded data does not match the predetermined check data incorporated in encryption, and the decoded data is determined as abnormal (N in step S3 of Fig. 4). As a result, the picture and voice data recorded on the hard disk cannot be reproduced. In order to reproduce the content, the content broadcast received with the relevant hard disk recorder must be recorded on the hard disk, and thus the interest of the content provider is protected.

Further, the encryption process of the hard disk recorder according to the present invention is performed to the file system, and thus the data amount is small and frequent disc access is not performed. Therefore, the dedicated LSI for the encryption process is not necessary and the processing speed of the CPU does not need to be faster, and thus the illegal copy preventing function is achieved without involving increase in cost.

Moreover, when the data recorded on the hard disk of the different hard disk recorder with a different serial number from the relevant hard disk recorder is illegally copied to the hard disk of the relevant hard disk recorder, the decoded data is determined as abnormal when powered on (N in step S3 of Fig. 4). Accordingly, recording and reproducing cannot be performed as the data process using the hard disk, and only formatting can be performed. Thus, the illegally copied data must be erased, thereby preventing the illegally copied data from increasing indefinitely.

## Claims

1. A hard disk recorder including a hard disk configured as a recording medium; the hard disk recorder comprising:
a controlling section that creates encrypted data through encryption process with information unique to each device as key based on file system;
a data recording section that records encrypted data onto the hard disk; and
a data reading section, wherein
after powered on, the data reading section reads the encrypted data from the hard disk, and the controlling section decodes the read encrypted data and creates decoded data with the information unique to each device as the key, and determines whether or not the decoded data is normal,
when the controlling section determines the decoded data to be normal, the data recorded on the hard disk becomes reproducible, and
when the controlling section determines the decoded data to be abnormal, the data recorded on the hard disk becomes irreproducible.

2. The hard disk recorder according to claim 1, wherein
when the controlling section determines the decoded data to be abnormal, only the formatting operation is performable out of the data processes using the hard disk, and the recorded data becomes irreproducible.

3. The hard disk recorder according to claim 1 or 2, wherein
the controlling section incorporates predetermined check data to a predetermined position of the file system, and creates the encrypted data through encryption process with the information unique to each device as key, and
after powered on, the controlling section determines whether or not the decoded data is normal based on whether or not the data of the predetermined position of the decoded data matches the predetermined check data.

4. The hard disk recorder according to any one of claims 1 to 3, wherein the information unique to each device is a serial number.
